# EUROPEAN PATENT APPLICATION

(11) **EP 4 510 017 A1**
(43) Date of publication of application: **19.02.2025**
(21) Application number: 22937039.0
(22) Date of filing: 16.05.2022
(51) Int. Cl.: G06F 21/10

(54) **DECENTRALIZED TRUSTED TOKENIZATION PROTOCOL FOR OPEN SOURCE SOFTWARE**

(30) Priority: 13.04.2022 CN 202210386605
(71) Applicant: The Blockhouse Technology Limited, Cumnor, Oxfordshire OX2 9GG (GB); SSC Holding Company Ltd, Haikou, Hainan 571924 (CN)
(72) Inventor: LIU, Han, Haikou, Hainan 571924 (CN); ZHANG, Huafeng, Cumnor Oxfordshire OX2 9GG (GB); YANG, Zhiqiang, Cumnor Oxfordshire OX2 9GG (GB); LIU, Chao, Cumnor Oxfordshire OX2 9GG (GB); SONG, Feihu, Cumnor Oxfordshire OX2 9GG (GB); CHEN, Bangdao, Cumnor Oxfordshire OX2 9GG (GB)
(74) Representative: Boult Wade Tennant LLP
(86) International application number: PCT/CN2022/092910
(87) International publication number: WO 2023/197397

(57) **Abstract**

The present invention discloses a decentralized open-source software protocol for open-source software and developers globally. The protocol is based on a non-fungible token (NFT) associated with a commit of a source code developed in collaboration, such as an open-source software code. With this protocol, contributors of an open-source software code are incentivized to take on well-specified tasks and then claim their contributions to development in the form of the NFT. A trusted transparency centre (TC) is proposed in the present invention as a core technology to enable trusted software analysis so as to yield the fundamental information and value of a given commit in a repository.

## Description

### TECHNICAL FIELD

The present invention relates to the generation of non-fungible tokens associated with commits to software source code, particularly though not exclusively in relation to collaboratively developed source code such as open-source software code.

### BACKGROUND OF THE INVENTION

In the world of software development, it is common practice for many developers to collaborate on a joint software project, often using the open-source model. Those skill in the art will appreciate that open-source software is, as is implied by the name, software where the source code is made freely available for modification and redistribution. In other words, it is a model that allows for decentralised software development that uses a community of developers that collaborate to further develop that software.

Typically, a developer may work on these types of projects for any number of reasons, a small number of examples of which include a general passion for the goals of the project, for academic purposes, or to enhance their own skills as a developer. However, the Applicant has appreciated that there are few, if any, mechanisms to incentivise developers to contribute in open-source projects and most projects are unable to attract and reach global developers.

According to the 2020 Digital Insight Report by GitHub^{®}, 99.95% of the developers are inactive, and 71.21% of open-source projects are supported by fewer than 10 developers. At one point in time, the open-source project "OpenSSL" was maintained by only a single active developer.

Developers that do contribute to these open-source projects may provide code with significant impact to the project. For example, changes to the source code (referred to as a "commit") supplied by a particular developer might add a particularly important new feature to the project, or might fix a particular bug or critical security flaw.

The Applicant has appreciated that it would be beneficial to provide a mechanism for determining the value associated with a particular code and properly attributing it to the relevant developer(s).

### SUMMARY OF THE INVENTION

When viewed from a first aspect, embodiments of the present invention provide a method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
performing symbolic execution of the first and second control flow graphs to generate respective first and second semantic representations;
analysing the first and second semantic representations to determine semantic information associated with the commit;
generating a non-fungible token; and
associating the non-fungible token with the structural information and semantic information associated with the commit.

This first aspect of the invention extends to a trusted execution environment configured to generate a non-fungible token associated with a commit to a source code, the trusted execution environment being configured to:
receive a first source code and a second source code, the second source code being a result of the first source code subject to the commit;
parse the first and second source codes to respectively generate first and second structural representations therefrom;
compile the first and second source codes to respectively generate first and second executable codes therefrom;
generate respective first and second control flow graphs from the first and second executable codes;
analyse the first and second structural representations and the first and second control flow graphs to determine structural information associated with the commit;
perform symbolic execution of the first and second control flow graphs to generate respective first and second semantic representations;
analyse the first and second semantic representations to determine semantic information associated with the commit;
generate a non-fungible token; and
associate the non-fungible token with the structural information and semantic information associated with the commit.

The first aspect of the invention also extends to a non-transitory computer-readable medium comprising instructions that, when executed by a processor, cause the processor to carry out a method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
performing symbolic execution of the first and second control flow graphs to generate respective first and second semantic representations;
analysing the first and second semantic representations to determine semantic information associated with the commit;
generating a non-fungible token; and
associating the non-fungible token with the structural information and semantic information associated with the commit.

The first aspect of the invention also extends to a computer software product comprising instructions that, when executed by a processor, cause the processor to carry out a method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
performing symbolic execution of the first and second control flow graphs to generate respective first and second semantic representations;
analysing the first and second semantic representations to determine semantic information associated with the commit;
generating a non-fungible token; and
associating the non-fungible token with the structural information and semantic information associated with the commit.

Thus, it will be appreciated that embodiments of the present invention provide an arrangement in which a "trusted execution environment" (TEE) is used to analyse the impact of a given commit to software code by inspecting the semantic and structural content associated with that commit and then generating a non-fungible token (NFT) that is then associated with information regarding the semantic and structural content associated with that commit. Thus, the NFT provides a "fingerprint" of the commit c, capturing the impact that the commit c has on the structural and/or semantic content of the relevant source code.

In other words, for a given code commit c: the source code s before the commit c and the source code s' after the commit c are taken as inputs (s, s', c) for a "Transparency Centre" (TC) service which provides a trusted computing environment based on a TEE. This TC service can, if desired, be set up on any cloud platform.

Those skilled in the art will appreciate that a TEE is a secure processing arrangement, which may form a portion of a larger processing arrangement or processor, such as a central processing unit (CPU). There are a number of different types of TEE, known in the art *per se,* to which the various aspects and embodiments of the present invention may be readily applied. Thus, a TEE is a computing environment which can run general purpose programs. It typically has its own memory but can extend this with care by constrained and encrypted use of an external memory. It can securely attest itself to users, so no user can reasonably believe they are using or seeing results from a TEE without this being true. This will generally involve attestation and some form of key agreement and the bootstrapping of signature mechanism between TEE and user. Generally speaking, a TEE will be configured only to use programs that are known and trusted by all parties. Furthermore, a TEE will typically be able to attest to the way it is configured.

The use of a TEE-based transparency centre service as per the present invention is highly advantageous because the TEE ensures that the processes used to perform the analysis can be trusted. This is because the code running on the TEE is stored securely and cannot be tampered with, as outlined above. Due to this, the structural and semantic analysis performed in respect of the commit can be trusted to be objective. In particular, the use of a TEE-based transparency centre service ensures that the processes used to perform the analysis can be trusted, as the code running on the TEE is stored securely and cannot be tampered with. As a result, the analysis of the code commit, and thus the value provided by the developer of that commit, can be trusted to be objective as the commit is subject to the same analysis as any other commit input to this service.

The Applicant has appreciated that a further benefit of using a TEE for the analysis process of the present invention is that the TEE provides a high degree of flexibility for changing the implementation of the software analysis if desired. While cryptography-based solutions could be used without a TEE, these are generally realised for a particular analysis implementation and would require complex realisation or redesign if the software analysis is to be changed at a later date. Furthermore, the use of a TEE enables confidential software analysis where it is desirable for the implementation to not be revealed. By way of illustration, if: t is the source code of a software analyser; t' is the encrypted version of t; and x is the executable of t, the provider of t could send t' and x to the TEE-based transparency centre to run the software analysis and prove that the results are generated by x which relates to t (and t') without revealing t to others.

It will be appreciated by those skilled in the art that the term "source code" is used to mean the underlying code typically written wholly or partially by human(s) prior to any compilation process. This may be written in a conventional programming language such as: C; C++; C#; Java; Python; Visual Basic; JavaScript; R; SQL; or PHP, though it will be appreciated that this list is non-exhaustive and there are thousands of different programming languages, known in the art*per se*, to which the principles of the present invention readily apply. The present invention may also be used with proprietary programming languages that are not widely used, so long as the relevant analysis can be carried out on the code.

The TC service performs a structural analysis process St to parse (s, s') into a pair of structural representations (t, t'), which in some embodiments may comprise syntax trees (sometimes referred to as "abstract syntax trees"). Those skilled in the art will appreciate that the computation of these first and second structural representations (which may comprise syntax trees, as above) can be realised via well-defined tree/graph algorithms or specific machine learning processes, known in the art *per se.*

The step of analysing the structural representations to determine structural information associated with the commit may, at least in some embodiments, comprise computing a first structural encoding (M_Structural_A). This encoding M_Structural_A may therefore provide a work proof for c based on (t, t').

As outlined above, the method includes compiling the first and second source codes (s, s') into corresponding executable codes (b, b') as low-level representations of (s, s') and building control flow graphs (g, g') for both executable codes. Thus, in some potentially overlapping embodiments, the step of analysing the first and second control flow graphs to determine structural information associated with the commit may comprise computing a second structural encoding (M_Structural_B). This encoding M_Structural_B may therefore provide a work proof for c based on (g, g').

The process of generating the structural information from the abstract syntax trees (or similar) and control flow graphs may, in some embodiments, involve running a systematic traversal over the given graph structure, i.e., the abstract syntax tree (which is a type of graph) and/or control flow graph as appropriate. During this process, all nodes in the graph are visited according to a depth-first-search (DFS) process. Using this process, each time a node is visited, the structural information is updated based on what the node contains. The process then continues to visit the next node based on DFS. The process continues until all nodes have been covered in the graph, at which point the process is complete.

The symbolic execution step may work in a similar way by visiting a control flow graph (CFG) systematically, e.g., using DFS. In accordance with such embodiments, before the execution starts, the process assigns symbolic values (e.g., X, Y, Z), rather than concrete values, to all variables used in the CFG. Then, all nodes and paths in the CFG may be symbolically executed, one-by-one. Specifically, the execution process would, based on the virtual machine standard and the symbolized context, execute all instruction information within each control flow basic block in a symbolized manner, update the symbolized state of the software analysis process, and add the semantic graph structure and other relevant semantic information. Exploring a complete path in a CFG results in a collection of symbolic values and their expressions.

In some embodiments, a "Satisfiable Modulo Theory" (SMT) solver may be used to check whether the expressions are solvable, i.e., to find at least one set of concrete values for all symbolic variables to make the expressions to be evaluated as true. If so, the path is feasible because under specific conditions it is able to be triggered. Unsolvable paths will be ignored and the process completes until all paths have been explored. The SMT solver may form part of the same module that carries out the symbolic execution of the CFGs, or may be a separate module.

In a particular set of embodiments, the structural information (M_Structural) may therefore be a combination of these two structural encodings M_Structural_A and M_Structural_B.

In some cases, the commit may be provided alongside a commit log, i.e., an overview of what the commit provides. This may be in the form of a written description and/or a set of options that can indicate certain properties of the commit. For example, the commit log may indicate that the commit introduces one or more new features and/or that the commit fixes a particular bug in the software. In some embodiments, the method further comprises extracting data from a commit log associated with the commit. This optional semantic analysis process may be referred to as "Se-a". In a set of such embodiments, the step of extracting data from a commit log associated with the commit may comprise computing a first semantic encoding (M_Semantic_A).

As outlined above, the method of the present invention includes performing a semantic analysis process (referred to as "Se-b") on the first and second control flow graphs (g, g'). In some embodiments, the step of analysing the first and second semantic representations comprises computing a second semantic encoding M_Semantic_B. This encoding M_Semantic_B may provide an encoding of work proof for c via specific forms of formal verification technologies, e.g., by symbolically traversing both graphs to capture and vectorise semantic updates to the source code. In general, it will be understood that the term "semantic updates" refers to logic modifications regardless of the structural forms of the source code, for example including but not limited to conditional procedures, value dependencies etc.

In a particular set of embodiments, the semantic information (M_Semantic) may therefore be a combination of these two structural encodings M_Semantic_A and M_Semantic_B.

The TEE may provide as an output a combination of the various encodings, depending on their presence in a given set of embodiments. In a particular set of embodiments, the output of the TEE comprises the structural information M_Structural and the semantic information M_Semantic.

The structural information M_Structural and semantic information M_Semantic may, in some embodiments, each comprise a respective numeric vector. Each value in these numeric vectors may be either "accountable" or "non-accountable". A value being accountable means that the value directly relates to a property that can be explained independently and can be generated by vectorisation techniques, known in the art *per se.* A non-accountable value relates to the vector as a whole rather than to any independent value, and these non-accountable values may be generated by a machine learning or deep learning model. Thus, the encodings, or numeric vectors, provide objective abstractions of the software commits.

Arrangements are envisaged in which a numerical score for a given software commit could be generated by applying a particular formula to the encodings to generate a numerical score, though the formula chosen would make the numerical score a subjective measure, rather than the objective measures given by the encodings themselves. Generally, therefore, the impact of a particular commit is instead acknowledged through community consensus (if a majority of developers and/or users feel positive about it, then it is deemed impactful) later in the development process or usage of the software, instead of at the time of commit. Therefore, embodiments of the present invention generate an unbiased abstraction using the structural information M_Structural and semantic information M_Semantic from the commit. As a result, regardless of how community perception of the commit changes over time (e.g., from positive to negative or *vice versa*), the objective measures provided by M_Structural and M_Semantic remain unchanged.

The term "source code" should also be understood to extend to an "intermediate language" code, such as LLVM IR. Those skilled in the art will appreciate that intermediate code typically provides an intermediate representation between the source code (written in a high level programming language such as those listed above) and machine code for execution. The analysis and verification techniques that may be applied to source code in accordance with embodiments of the various aspects of the present invention may also be carried out on such intermediate code. Thus, the vendor may supply the "source code" in such an intermediate representation form.

Thus, as outlined above, in some embodiments the source code comprises software code. However, as well as being used to generate NFTs associated with commits to software source code, the Applicant has appreciated that principles of the present invention may also be applied to hardware. Those skilled in the art will appreciate that electronic circuits, in particular complex digital circuits, can be defined using a hardware description language (HDL), where a synthesiser (akin to a compiler used in software development) can convert the HDL description of the desired circuit behaviours into a "netlist", i.e., a list of physical electronic components (typically from a predefined library of components) and the relevant connections between these, that once built into a physical circuit would have the properties defined in the HDL description. The term "source code" as used herein should also be understood to encompass code written in HDL. Two commonly used HDLs are Verilog and VHDL, though these are merely exemplary and the principles of the present invention apply to any such HDLs. As such, in some embodiments, the source code comprises HDL code.

Those skilled in the art will further appreciate that the term "executable code" - as used in relation to certain embodiments of the present invention - is used to mean code that can be executed by a processor in order to carry out the associated function(s). In general, executable code is derived from source code via a compilation process, which results in a "binary" (also referred to as "machine code" or "machine-readable code"). While typically this takes a form that is illegible to humans, the term "executable code" also extends to "executable source code", where the human-readable code is executable. The term "executable code" further extends to cover "bytecode" (sometimes referred to as "portable code" or "p-code"), which, as those skilled in the art will appreciate, is a form of instruction set designed for execution by a software interpreter or for further compilation into machine code.

The code provided by the vendor may be subject to some obfuscation process. For example, source code (or some intermediate code) may be obfuscated so as to render the code unintelligible to humans but nevertheless able to be compiled into an executable that provides the same function as an executable compiled from the source code pre-obfuscation, or can be executed in its obscured source code form.

It should be understood, however, that there is no strict requirement regarding the legibility or intelligibility of the source code or executable code to humans and/or machines. However, generally, the source code and executable code may be of forms such that the source code is comprehensible for the purposes of the analysis carried out within the TEE whereas the executable code may not be, or may be comprehensible but to a lesser extent than the source code. While the executable code generally won't be clear to humans, it should be understood that the source code also does not necessarily need to be clear to humans either, so long as the analysis conducted within the TEE can be carried out on that source code.

The principles of the present invention may apply to any software project in which commits are made to update the source code. While this may, for example, be a software project worked on by a single developer, the invention is particularly advantageous in arrangements in which multiple different users contribute to the source code, for example in a collaborative open-source software project. Thus, in some embodiments, the source code is editable by a plurality of users. The ability to generate NFTs that are associated with a developer's contributions to the project may encourage developers to engage with the project.

As outlined previously, the TEE operates using the source code from before the commit (the "first" source code) and after the commit (the "second" source code). In some embodiments, the first and second source codes are supplied directly to the trusted execution environment. In an alternative set of embodiments, however, the first source code and the commit are supplied directly to the trusted execution environment, the method further comprising generating the second source code by subjecting the first source code to the commit.

In some embodiments, the method further comprises extracting one or more intention labels from the commit and adding the one or more intention labels to the semantic information associated with the commit.

In some embodiments, the non-fungible token comprises the structural information and semantic information associated with the commit. In other words, the structural and semantic information - or 'metadata' - may be stored in a data field of the NFT. Doing so may make this information readily accessible simply by inspecting the NFT itself, however this may impose a disadvantage in that it increases the storage required by the NFT. This is a particularly important consideration because storing the metadata in an NFT would generally increase the cost to store the NFT on a blockchain because such blockchain systems typically require payment for every bit of blockchain storage.

Thus, in some preferred embodiments, the method further comprises storing the structural information and semantic information associated with the commit in a database, the structural information and semantic information being stored against an identifier associated with the non-fungible token. In other words, the metadata may be stored in off-blockchain storage, with the NFT providing a pointer (i.e., the identifier) that indicates where the metadata can be found. It should be noted that an attacker cannot fake the metadata even though it is put in an off-blockchain storage since the process to generate the metadata is verifiable. An observer provided with an input from a trusted source can use the link in an NFT to find the metadata and run the process locally to generate a copy of the metadata and then check whether or not the stored metadata is valid.

In some embodiments, the method further comprises: extracting data from one or more information fields associated with the commit; and associating the data with the non-fungible token. In a set of such embodiments, the one or more information fields comprise one or more of: user identity information; repository information; and/or a timestamp. Thus, the TC service may perform an extraction process E to collect basic information M_Basic from the source code(s), the commit, and/or a commit log as appropriate, including one or more of: the creator of c, timestamp of c, project repository associated with c, etc. This basic information M_Basic may be provided as an output of the TEE, and in a set of embodiments is an output of the TEE alongside M_Structural and/or M_Semantic as outlined previously.

It will be appreciated that the TEE may comprise suitable components or modules configured to carry out the features of the present invention. One or more of (and potentially all of) the various functions may be carried out by the same component or module, and/or one or more of (and potentially all of) these functions may be carried out by a respective standalone component or module.

In some embodiments, the trusted execution environment comprises a reception module configured to receive the first and second source codes.

In some embodiments, the trusted execution environment comprises a parser configured to parse the first and second source codes to respectively generate first and second structural representations therefrom.

In some embodiments, the trusted execution environment comprises a compiler configured to compile the first and second source codes to respectively generate the first and second executable codes therefrom.

In some embodiments, the trusted execution environment comprises a control flow graph generator configured to generate respective first and second control flow graphs from the first and second executable codes.

In some embodiments, the trusted execution environment comprises a tree analyser configured to analyse the first and second structural representations.

In some embodiments, the trusted execution environment comprises a graph analyser configured to analyse the first and second control flow graphs.

In some embodiments, the trusted execution environment comprises a symbolic executor configured to perform symbolic execution of the first and second control flow graphs to generate respective first and second semantic representations.

In some embodiments, the trusted execution environment comprises a graph analyser configured to analyse the first and second semantic representations to determine semantic information associated with the commit.

In some embodiments, the trusted execution environment comprises a non-fungible token generator configured to generate the non-fungible token and to associate the non-fungible token with the structural information and semantic information associated with the commit.

The Applicant has appreciated that the use of both structural and semantic analysis is highly beneficial because it provides an objective, comprehensive overview of the impact provided by the software commit. Using both to analyse the function of the software code (and the commit in particular) is useful because it is possible to have two software codes a and b that have similar structures but that manifest very different functionalities. Conversely, it is also possible for a and b to have exactly same functionalities but have very different structures, which is commonly the case when a developer refactors the software, say from a to b, in order to make the code more readable and/or easier to maintain. However, the Applicant has appreciated that in some scenarios, only one of the structural or semantic analysis is required.

Thus, when viewed from a second aspect, embodiments of the present invention provide a method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
generating a non-fungible token; and
associating the non-fungible token with the structural information associated with the commit.

This second aspect of the invention extends to a trusted execution environment configured to generate a non-fungible token associated with a commit to a source code, the trusted execution environment being configured to:
receive a first source code and a second source code, the second source code being a result of the first source code subject to the commit;
parse the first and second source codes to respectively generate first and second structural representations therefrom;
compile the first and second source codes to respectively generate first and second executable codes therefrom;
generate respective first and second control flow graphs from the first and second executable codes;
analyse the first and second structural representations and the first and second control flow graphs to determine structural information associated with the commit;
generate a non-fungible token; and
associate the non-fungible token with the structural information associated with the commit.

The second aspect of the invention also extends to a non-transitory computer-readable medium comprising instructions that, when executed by a processor, cause the processor to carry out a method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
generating a non-fungible token; and
associating the non-fungible token with the structural information associated with the commit.

The second aspect of the invention also extends to a computer software product comprising instructions that, when executed by a processor, cause the processor to carry out a method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
generating a non-fungible token; and
associating the non-fungible token with the structural information associated with the commit.

Alternatively, when viewed from a third aspect, embodiments of the present invention provide a method of operating a trusted execution environment to generate a non-fungible token associated with a commit to a source code, the method comprising:
supplying the trusted execution environment with a first source code and a second source code, the second source code being a result of the first source code subject to the commit;
compiling the first and second source codes to respectively generate first and second executable codes therefrom;
generating respective first and second control flow graphs from the first and second executable codes;
performing symbolic execution of the first and second control flow graphs to generate respective first and second semantic representations;
analysing the first and second semantic representations to determine semantic information associated with the commit;
generating a non-fungible token; and
associating the non-fungible token with the semantic information associated with the commit.

This third aspect of the invention extends to a trusted execution environment configured to generate a non-fungible token associated with a commit to a source code, the trusted execution environment being configured to:
receive a first source code and a second source code, the second source code being a result of the first source code subject to the commit;
compile the first and second source codes to respectively generate first and second executable codes therefrom;
generate respective first and second control flow graphs from the first and second executable codes;
perform symbolic execution of the first and second control flow graphs to generate respective first and second semantic representations;
analyse the first and second semantic representations to determine semantic information associated with the commit;
generate a non-fungible token; and
associate the non-fungible token with the semantic information associated with the commit.

The third aspect of the invention also extends to a non-transitory computer-readable medium comprising instructions that, when executed by a processor, cause the processor to carry out a method of operating a trusted execution environment to generate a non-fungible token associated with a commit to a source code, the method comprising:
supplying the trusted execution environment with a first source code and a second source code, the second source code being a result of the first source code subject to the commit;
compiling the first and second source codes to respectively generate first and second executable codes therefrom;
generating respective first and second control flow graphs from the first and second executable codes;
performing symbolic execution of the first and second control flow graphs to generate respective first and second semantic representations;
analysing the first and second semantic representations to determine semantic information associated with the commit;
generating a non-fungible token; and
associating the non-fungible token with the semantic information associated with the commit.

The third aspect of the invention also extends to a computer software product comprising instructions that, when executed by a processor, cause the processor to carry out a method of operating a trusted execution environment to generate a non-fungible token associated with a commit to a source code, the method comprising:
supplying the trusted execution environment with a first source code and a second source code, the second source code being a result of the first source code subject to the commit;
compiling the first and second source codes to respectively generate first and second executable codes therefrom;
generating respective first and second control flow graphs from the first and second executable codes;
performing symbolic execution of the first and second control flow graphs to generate respective first and second semantic representations;
analysing the first and second semantic representations to determine semantic information associated with the commit;
generating a non-fungible token; and
associating the non-fungible token with the semantic information associated with the commit.

The Applicant has further appreciated that when only semantic analysis is being performed, the code may be supplied to the TEE in executable (i.e., binary code) form only. Thus, when viewed from a fourth aspect, embodiments of the present invention provide a method of operating a trusted execution environment to generate a non-fungible token associated with a commit to a source code, the method comprising:
supplying the trusted execution environment with first and second executable codes, the first and second executable codes being compiled versions of a first source code and a second source code, the second source code being a result of the first source code subject to the commit;
generating respective first and second control flow graphs from the first and second executable codes;
performing symbolic execution of the first and second control flow graphs to generate respective first and second semantic representations;
analysing the first and second semantic representations to determine semantic information associated with the commit;
generating a non-fungible token; and
associating the non-fungible token with the semantic information associated with the commit.

This fourth aspect of the invention extends to a trusted execution environment configured to generate a non-fungible token associated with a commit to a source code, the trusted execution environment being configured to:
receive first and second executable codes, the first and second executable codes being compiled versions of a first source code and a second source code, the second source code being a result of the first source code subject to the commit;
generate respective first and second control flow graphs from the first and second executable codes;
perform symbolic execution of the first and second control flow graphs to generate respective first and second semantic representations;
analyse the first and second semantic representations to determine semantic information associated with the commit;
generate a non-fungible token; and
associate the non-fungible token with the semantic information associated with the commit.

The fourth aspect of the invention also extends to a non-transitory computer-readable medium comprising instructions that, when executed by a processor, cause the processor to carry out a method of operating a trusted execution environment to generate a non-fungible token associated with a commit to a source code, the method comprising:
supplying the trusted execution environment with first and second executable codes, the first and second executable codes being compiled versions of a first source code and a second source code, the second source code being a result of the first source code subject to the commit;
generating respective first and second control flow graphs from the first and second executable codes;
performing symbolic execution of the first and second control flow graphs to generate respective first and second semantic representations;
analysing the first and second semantic representations to determine semantic information associated with the commit;
generating a non-fungible token; and
associating the non-fungible token with the semantic information associated with the commit.

The fourth aspect of the invention also extends to a computer software product comprising instructions that, when executed by a processor, cause the processor to carry out a method of operating a trusted execution environment to generate a non-fungible token associated with a commit to a source code, the method comprising:
supplying the trusted execution environment with first and second executable codes, the first and second executable codes being compiled versions of a first source code and a second source code, the second source code being a result of the first source code subject to the commit;
generating respective first and second control flow graphs from the first and second executable codes;
performing symbolic execution of the first and second control flow graphs to generate respective first and second semantic representations;
analysing the first and second semantic representations to determine semantic information associated with the commit;
generating a non-fungible token; and
associating the non-fungible token with the semantic information associated with the commit.

It will be appreciated that the optional features described above with respect to the first aspect of the invention apply equally to the second, third, and fourth aspects of the invention, as appropriate.

### BRIEF DESCRIPTION OF THE DRAWINGS

Certain embodiments of the present invention will now be described with reference to the accompanying drawings, in which:
Fig. 1 is a schematic diagram illustrating a commit to software source code in a repository;
Fig. 2 is a block diagram of a trusted execution environment (TEE)-based transparency centre in accordance with an embodiment of the present invention; and
Fig. 3 is a block diagram illustrating a scheme for extracting basic, semantic, and structural information associated with the commit in accordance with an embodiment of the present invention.

### DETAILED DESCRIPTION

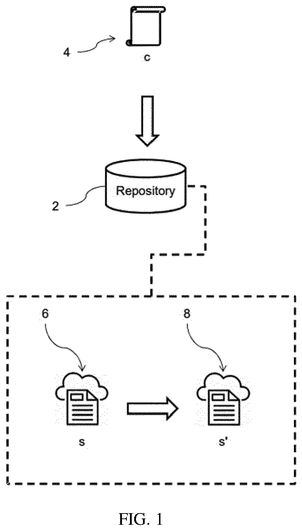

Fig. 1 is a schematic diagram illustrating a commit to software source code in a repository. As can be seen in Fig. 1, a repository 2 is used to store and document the source code for a software project which may, for example, be an open-source software project in which many users can contribute changes to the source code in the form of a commit (c) 4.

The repository 2 stores a current version of the source code (s) 6. When a commit 4 is submitted, the repository 2 updates the source code to a new version of the source code (s') 8, where s' differs from s by the changes implemented in the commit c.

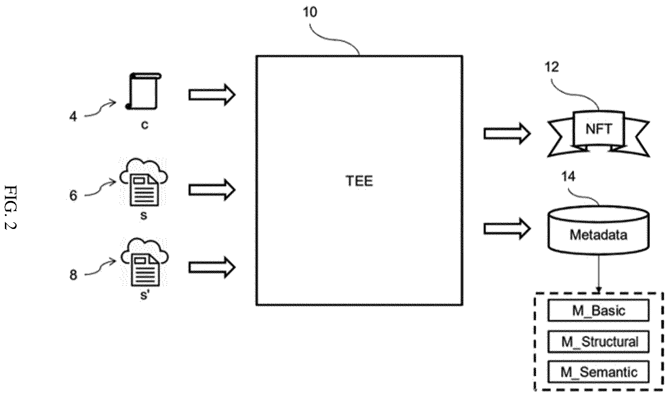

Fig. 2 is a block diagram of a trusted execution environment (TEE)-based transparency centre (TC) in accordance with an embodiment of the present invention. As can be seen in Fig. 2, a TEE 10 takes the commit 4, the pre-commit source code 6, and the post-commit source code 8 as inputs. As is outlined in further detail below, the TEE 10 provides a TC service that generates an NFT 12 and associated metadata 14.

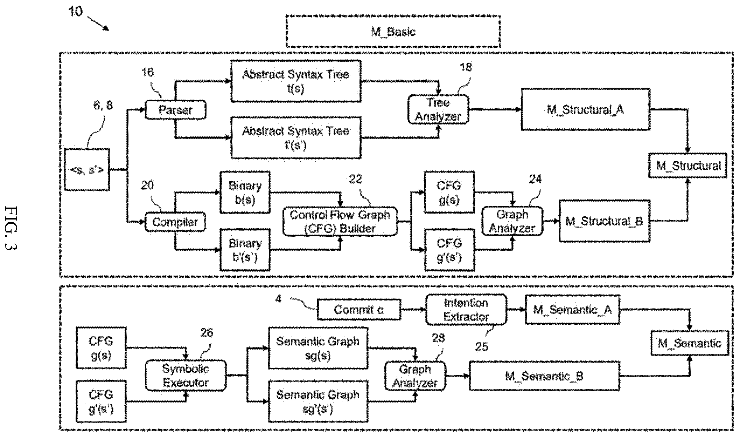

Fig. 3 is a block diagram illustrating a scheme for extracting basic, semantic, and structural information associated with the commit in accordance with an embodiment of the present invention.

The TC service may perform an extraction process E to collect basic information M_Basic from the source codes s, s', the commit c, and/or a commit log. In this embodiment, the basic information M_Basic includes the creator of c, timestamp of c, project repository associated with c, etc. This basic information M_Basic may be provided as an output of the TEE, and in a set of embodiments is an output of the TEE alongside M_Structural and/or M_Semantic as outlined previously.

As outlined above, the TEE 10 is supplied with the pre- and post-commit source codes 6, 8. The TEE 10 uses a parser 16 to parse these source codes (s, s') 6, 8 to respectively generate first and second abstract syntax trees t(s), t'(s') which are structural representations of the respective source codes 6, 8.

The first and second abstract syntax trees t(s), t'(s') are input to a tree analyser 18. The tree analyser 18 assesses the trees t(s), t'(s'). The tree analyser 18 uses well-defined tree/graph algorithms and/or specific machine learning processes to analyse the content of the syntax trees t(s), t'(s').

It will be appreciated that such algorithms are generally known in the art per se. However, for ease of understanding, a brief overview of suitable algorithms is provided below. It should be appreciated, however, that any suitable algorithm may be used in accordance with the principles of the present invention.

In the case of graph algorithms, a graph is systematically traversed and a pre-defined vector structure is refined on the fly. For example, a triple structure may be used having three attributes, each of which represents the number of a specific type of graph nodes. The vectorization process involves going through the graph and counting the nodes of each type.

In the case of machine learning or deep learning, an encoding for a given graph is generated, e.g., AST or CFG. This encoding can be generated via well-designed algorithms known in the art *per se,* including but not limited to MDS, IsoMap, DeepWalk, graph2vec etc. More specifically, this generation is a two-phase process, i.e., training and predicting. In a deep-learning based training phase, a collection of graphs, as a form of dataset, is fed into a training engine. For each graph, Weisfeiler-Lehman graph kernels are extracted from the graph to produce a set of sub-graphs. Then, all kernels are taken as input for a multi-layer neural network for training based on back-propagation and stochastic gradient descent techniques to assign numeric vectors for graphs and all sub-graphs. In the predicting phase, the deep-learning model calculates to produce a numeric vector for a given graph by dividing it into sub-graphs and then mapping them to those in the model. In embodiments of the present invention, given a pair of graphs, e.g., AST or CFG, a pair of their encodings from the model are generated as high-dimension numeric vectors. Then, the vector distance for the pair of vectors is computed to indicate whether they are structurally and semantically close to each other. As a result, a triple for a pair of before and after graphs is obtained, i.e., where one is "before" encoding, the other is "after" encoding, and a value of their distance ranging from -1 to 1 is obtained (where -1 indicates far and 1 indicates close).

It will be appreciated that each of abstract syntax trees t(s), t'(s') provides a tree-like representation of the code, where structural elements such as code sequences, conditionals (e.g., "if" statements), and loops (e.g., "while" loops, "for" loops, etc.) are laid out structurally. The tree analyser 18 can inspect the trees t(s) and t'(s') from before and after the commit c to determine what changes, if any, the commit c makes to the syntactic structure of the source code.

The TEE 10 then computes a structural encoding (M_Structural_A) which provides a work proof for c based on (t, t'). This structural encoding (M_Structural_A) may be computed by the tree analyser 18 itself, or may be computed by another component of the TEE 10 based on the output of that tree analyser 18.

The TEE 10 includes a compiler 20 which compiles the source codes 6, 8 to respectively generate first and second binaries b(s), b'(s'). The TEE 10 also includes a Control Flow Graph (CFG) builder 24 which generates first and second CFGs g(s), g'(s') from the binaries b(s), b'(s') generated from the pre- and post-commit source codes s, s'. As outlined in more detail below, these first and second CFGs g(s), g'(s') are also used in the semantic analysis process carried out by the TEE 10.

While the syntax trees t(s), t'(s') provide a structural representation of the code at a high-level (i.e., in the generally more human-readable source code form), the CFGs g(s), g'(s') provide a structural representation of the code at a low-level, i.e., in its machine executable form (or "binary").

A graph analyser 24 within the TEE 10 takes the CFGs g(s), g'(s') as inputs and inspects the CFGs g(s) and g'(s') from before and after the commit c to determine what changes, if any, the commit c makes to the structure of the executable version of the source code.

The TEE 10 then computes a structural encoding (M_Structural_B) which provides a work proof for c based on (g, g'). This structural encoding (M_Structural_B) may be computed by the graph analyser 24 itself, or may be computed by another component of the TEE 10 based on the output of that graph analyser 24.

The two structural encodings M_Structural_A and M_Structural_B are then combined by the TEE 10 to produce structural information M_Structural associated with the commit c.

The commit 4 is also input to an intention extractor 25 which extracts one or more intention labels, encoded as M_Semantic_A.

The first and second CFGs g(s), g'(s') generated by the CFG builder 22 are also input to a symbolic executor 26 of the TEE 10. This symbolic executor 26 performs symbolic execution of the CFGs g(s), g'(s') to generate respective first and second semantic graphs sg(s), sg'(s') which are input to a further graph analyser 28.

The symbolic execution of a given CFG performed by the symbolic executor 26 operates by visiting all nodes in that CFG systematically, e.g., using DFS. Before the execution starts, the process assigns symbolic values (e.g., X, Y, Z) rather than concrete values to all variables used in the CFG. Then, every node and path in the CFG is symbolically executed, one-by-one. Specifically, the execution process would, based on the virtual machine standard and the symbolized context, execute all instruction information within each control flow basic block in a symbolized manner, update the symbolized state of the software analysis process, and add the semantic graph structure and other relevant semantic information. After exploring a complete path in the CFG, a collection of symbolic values and their expressions is obtained. It will be appreciated that, in practice, the graph analyser 28 may be the same functional unit as the graph analyser 24 used in the structural analysis, or may be a separate functional unit.

Next, the symbolic executor 26 uses a Satisfiable Modulo Theory (SMT) solver to check whether the expressions are solvable, i.e., whether at least one set of concrete values for all symbolic variables to make the expressions can be evaluated as TRUE. If so, the path is deemed feasible because under specific conditions, it can be triggered. Unsolvable paths will be ignored and the process completes until all paths have been explored. The SMT solver in this embodiment is an independent module integrated by the symbolic executor 26, though it will be appreciated that it may alternatively be integrated in another component (such as the graph analyser 28) or may be an independent component. An exemplary SMT is the Z3 from Microsoft^{®}, however this is not limiting and other SMT solvers are available and those skilled in the art may provide their own implementation.

The functionality an SMT solver offers is to automatically solve a decision problem with a set of logic formulas, e.g., expressions in the case of the present invention. This process involves first converting the set of logic formulas to a set of Boolean formulas (i.e., formulas having only Boolean variables which can either take the value TRUE or FALSE). Then, some forms of backtracking algorithms are run to decide the satisfiability of the set of formulas. Specifically, a literal is systematically selected and given a concrete value. Based on its value, the expressions are simplified based on underlying theories introduced in these expressions and these are then divided into sub-programs. For each sub-program, it is decided whether it is satisfiable or not. This process is repeated recursively (i.e., giving concrete values, simplifying, and dividing) until a final decision is achieved for the whole set of formulas.

The output of the graph analyser 28 is encoded as M_Semantic_B, which is combined with M_Semantic_A from the intention extractor 25 to generate semantic information M_Semantic.

Referring back to Fig. 2, the TEE 10 then generates the NFT 12 which is recorded on a suitable blockchain, e.g., using Ethereum. While the NFT 12 could contain the basic information M_Basic, structural information M_Structural, and semantic information M_Semantic, this may be prohibitively costly where the cost of recording data on the blockchain is dependent on the amount of data. To avoid this, TEE 10 generates the NFT 12 with a pointer to the metadata 14 containing the basic information M_Basic, structural information M_Structural, and semantic information M_Semantic, where this metadata 14 is stored off-blockchain.

Thus, it will be appreciated by those skilled in the art that embodiments of the present invention provide an arrangement in which the structural and semantic content of software code can be determined and a corresponding NFT - i.e., a digital token - can be generated that is associated with this content. This allows the value of a developer's work to be captured and turned into a digital asset. The use of a TEE-based transparency centre service ensures that the processes used to perform the analysis can be trusted, as the code running on the TEE is stored securely and cannot be tampered with. As a result, the analysis of the code commit, and thus the value provided by the developer of that commit, can be trusted to be objective as the commit is subject to the same analysis as any other commit input to this service.

While specific embodiments of the present invention have been described in detail, it will be appreciated by those skilled in the art that the embodiments described in detail are not limiting on the scope of the claimed invention.

## Claims

1. A method of operating a trusted execution environment to generate a non-fungible token associated with a commit to a source code, the method comprising:
supplying the trusted execution environment with a first source code and a second source code, the second source code being a result of the first source code subject to the commit;
parsing the first and second source codes to respectively generate first and second structural representations therefrom;
compiling the first and second source codes to respectively generate first and second executable codes therefrom;
generating respective first and second control flow graphs from the first and second executable codes;
analysing the first and second structural representations and the first and second control flow graphs to determine structural information associated with the commit;
performing symbolic execution of the first and second control flow graphs to generate respective first and second semantic representations;
analysing the first and second semantic representations to determine semantic information associated with the commit;
generating a non-fungible token; and
associating the non-fungible token with the structural information and semantic information associated with the commit.

2. The method as claimed in claim 1, wherein the source code is editable by a plurality of users.

3. The method as claimed in claim 1 or 2, wherein the first and second source codes are supplied directly to the trusted execution environment.

4. The method as claimed in claim 1 or 2, wherein the first source code and the commit are supplied directly to the trusted execution environment, the method further comprising generating the second source code by subjecting the first source code to the commit.

5. The method as claimed in any preceding claim, wherein the first and second structural representations comprise first and second syntax trees respectively.

6. The method as claimed in any preceding claim, wherein the step of analysing the structural representations to determine structural information associated with the commit comprises computing a first structural encoding, wherein the structural information comprises the first structural encoding.

7. The method as claimed in any preceding claim, wherein the step of analysing the first and second control flow graphs to determine structural information associated with the commit comprises computing a second structural encoding, wherein the structural information comprises the second structural encoding.

8. The method as claimed in any preceding claim, further comprising extracting data from a commit log associated with the commit.

9. The method as claimed in claim 8, wherein the step of extracting data from a commit log associated with the commit comprises computing a first semantic encoding, wherein the semantic information comprises the first semantic encoding.

10. The method as claimed in any preceding claim, wherein the step of analysing the first and second semantic representations comprises computing a second semantic encoding, wherein the semantic information comprises the second semantic encoding.

11. The method as claimed in any preceding claim, further comprising extracting one or more intention labels from the commit and adding the one or more intention labels to the semantic information associated with the commit.

12. The method as claimed in any preceding claim, wherein the non-fungible token comprises the structural information and semantic information associated with the commit.

13. The method as claimed in any preceding claim, comprising storing the structural information and semantic information associated with the commit in a ledger, the structural information and semantic information being stored against an identifier associated with the non-fungible token.

14. The method as claimed in claim 13, wherein the ledger comprises a blockchain ledger.

15. The method as claimed in any preceding claim, comprising:
extracting data from one or more information fields associated with the commit; and
associating the data with the non-fungible token.

16. The method as claimed in claim 15, wherein the one or more information fields comprise one or more of: user identity information; repository information; and/or a timestamp.

17. A trusted execution environment configured to generate a non-fungible token associated with a commit to a source code, the trusted execution environment being configured to:
receive a first source code and a second source code, the second source code being a result of the first source code subject to the commit;
parse the first and second source codes to respectively generate first and second structural representations therefrom;
compile the first and second source codes to respectively generate first and second executable codes therefrom;
generate respective first and second control flow graphs from the first and second executable codes;
analyse the first and second structural representations and the first and second control flow graphs to determine structural information associated with the commit;
perform symbolic execution of the first and second control flow graphs to generate respective first and second semantic representations;
analyse the first and second semantic representations to determine semantic information associated with the commit;
generate a non-fungible token; and
associate the non-fungible token with the structural information and semantic information associated with the commit.

18. A non-transitory computer-readable medium comprising instructions that, when executed by a processor, cause the processor to carry out a method of operating a trusted execution environment as claimed in any of claims 1 to 16.
